# EUROPEAN PATENT APPLICATION

(11) **EP 4 513 851 A1**
(43) Date of publication of application: **26.02.2025**
(21) Application number: 24175455.5
(22) Date of filing: 13.05.2024
(51) Int. Cl.: H04L 65/10

(54) **BLIND TRANSFER METHOD, COMMUNICATION APPARATUS, STORAGE MEDIUM AND CHIP**

(30) Priority: 23.08.2023 CN 202311073416
(71) Applicant: Shanghai X-Ring Technology Co., Ltd., Shanghai 201206 (CN)
(72) Inventor: TANG, Yongquan, Shanghai, 201206 (CN)
(74) Representative: Stöckeler, Ferdinand

(57) **Abstract**

A blind transfer method is executed by a first terminal, and the method includes: under a first condition, transmitting (201) a first request message to a second terminal, the first request message being configured to request for releasing dialogue resources between the first terminal and the second terminal, in which the first condition is that a dialogue between the second terminal and the third terminal is successful; and receiving (202) a first response message transmitted by the second terminal, the first response message being configured to indicate that the second terminal successfully received the first request message.

## Description

### FIELD

The present invention relates to the field of communication technologies, and particularly to a blind transfer method, a communication apparatus, a storage medium and a chip.

### BACKGROUND

Explicit Call Transfer (ECT), also known as call forwarding, is a special supplementary business configured to transfer a current call to another telephone number during a dialogue. No matter whether within the same location or in different geographical locations, ECT allows participants in the dialogue to transfer the call to other telephone terminals. ECT mainly has three manners: Blind Transfer, Assured Transfer, and Consultative Transfer, with more immediacy and flexibility compared to general Call Forwarding business.

### SUMMARY

The present invention provides a blind transfer method, a device, a communication apparatus, a storage medium, and a chip to solve problems in related technologies, thus reducing the waste of communication resources, and improving the stability of the blind transfer.

Embodiments of a first aspect of the present invention propose a blind transfer method, which is executed by a first terminal. The method includes: under a first condition, transmitting a first request message to a second terminal, the first request message being configured to request for releasing dialogue resources between the first terminal and the second terminal, in which the first condition is that a dialogue between the second terminal and a third terminal is successful, and the first request message is configured to request for releasing dialogue resources between the first terminal and the second terminal; and receiving a first response message transmitted by the second terminal, the first response message being configured to indicate that the second terminal successfully received the first request message.

Optionally, before transmitting the first request message to the second terminal under the first condition, the method further includes: transmitting a second request message to the second terminal, the second request message being configured to request the second terminal to establish the dialogue between the second terminal and the third terminal; and receiving a second response message transmitted by the second terminal, the second response message being configured to indicate that the second terminal successfully received the second request message.

Optionally, the method further includes: receiving a first notification message transmitted by the second terminal, the first notification message being configured to notify the first terminal that the second terminal attempted to establish the dialogue between the second terminal and the third terminal; and transmitting a third response message to the second terminal, the third response message being configured to indicate that the first terminal successfully received the first notification message.

Optionally, the method further includes: receiving a second notification message transmitted by the second terminal, the second notification message being configured to indicate whether the dialogue between the second terminal and the third terminal is successful; and determining that the first condition is satisfied based on the second notification message.

Optionally, the method further includes: transmitting a fourth response message to the second terminal, the fourth response message being configured to indicate that the first terminal successfully received the second notification message.

Embodiments of a second aspect of the present invention propose a blind transfer method, which is executed by a second terminal. The method includes: under a first condition, receiving a first request message transmitted by a first terminal, the first request message being configured to request for releasing dialogue resources between the first terminal and the second terminal, in which the first condition is that a dialogue between the second terminal and a third terminal is successful; and transmitting a first response message to the first terminal, the first response message being configured to indicate that the second terminal successfully received the first request message.

Optionally, before receiving the first request message transmitted by the first terminal, the method further includes: receiving a second request message transmitted by the first terminal, the second request message being configured to request the second terminal to establish the dialogue between the second terminal and the third terminal; and transmitting a second response message to the first terminal, the second response message being configured to indicate that the second terminal successfully received the second request message.

Optionally, the method further includes: transmitting a first notification message to the first terminal, the first notification message being configured to notify the first terminal that the second terminal attempted to establish the dialogue between the second terminal and the third terminal; and receiving a third response message transmitted by the first terminal, the third response message being configured to indicate that the first terminal successfully received the first notification message.

Optionally, the method further includes: transmitting a third request message to the third terminal, the third request message being configured for the second terminal to request for establishing the dialogue between the second terminal and the third terminal; and receiving a fourth response message transmitted by the third terminal, the fourth response message being configured to indicate that the third terminal successfully received the third request message.

Optionally, the method further includes: receiving a fifth response message transmitted by the third terminal, the fifth response message being configured to indicate that the third terminal attempted to establish the dialogue between the second terminal and the second terminal; and establishing the dialogue with the third terminal based on the fifth response message.

Optionally, the method further includes: transmitting a fourth request message to the third terminal, the fourth request message being configured to indicate that the second terminal successfully received the fourth response message.

Optionally, the method further includes: transmitting a second notification message to the first terminal, the second notification message being configured to indicate whether the dialogue between the second terminal and the third terminal is successful; and receiving a fourth response message transmitted by the first terminal, the fourth response message being configured to indicate that the first terminal successfully received the second notification message.

Embodiments of a third aspect of the present invention proposes a first terminal, the first terminal includes a receiving and transmitting unit, and the receiving and transmitting unit is configured to: transmit a first request message to a second terminal under a first condition, in which the first condition is that a dialogue between the second terminal and a third terminal is successful, and the first request message is configured to request for releasing dialogue resources between the first terminal and the second terminal; and receive a first response message transmitted by the second terminal, the first response message being configured to indicate that the second terminal successfully received the first request message.

Optionally, the receiving and transmitting unit is further configured to: transmit a second request message to the second terminal before transmitting the first request to the second terminal under the first condition, the second request message being configured to request the second terminal to establish the dialogue between the second terminal and the third terminal; and receive a second response message transmitted by the second terminal, the second response message being configured to indicate that the second terminal successfully received the second request message.

Optionally, the receiving and transmitting unit is further configured to: receive a first notification message transmitted by the second terminal, the first notification message being configured to notify the first terminal that the second terminal attempted to establish the dialogue between the second terminal and the third terminal; and transmit a third response message to the second terminal, the third response message being configured to indicate that the first terminal successfully received the first notification message.

Optionally, the receiving and transmitting unit is further configured to receive a second notification message transmitted by the second terminal, and the second notification message is configured to indicate whether the dialogue between the second terminal and the third terminal is successful.

Optionally, the first terminal further includes a determination unit, which is configured to determine that the first condition is satisfied based on the second notification message.

Optionally, the receiving and transmitting unit is further configured to transmit a fourth response message to the second terminal, and the fourth response message is configured to indicate that the first terminal successfully received the second notification message.

Embodiments of a fourth aspect of the present invention proposes a second terminal, the second terminal includes a receiving and transmitting unit, and the receiving and transmitting unit is configured to: receive a first request message transmitted by a first terminal under a first condition, the first request message being configured to request for releasing dialogue resources between the first terminal and the second terminal, in which the first condition is that a dialogue between the second terminal and a third terminal is successful; and transmit a first response message to the first terminal, the first response message being configured to indicate that the second terminal successfully received the first request message.

Optionally, the receiving and transmitting unit is further configured to: receive a second request message transmitted by the first terminal before receiving the first request message transmitted by the second terminal, the second request message being configured to request the second terminal to establish the dialogue between the second terminal and the third terminal; and transmit a second response message to the first terminal, the second response message being configured to indicate that the second terminal successfully received the second request message.

Optionally, the receiving and transmitting unit is further configured to: transmit a first notification message to the first terminal, the first notification message being configured to notify the first terminal that the second terminal attempted to establish the dialogue between the second terminal and the third terminal; and receive a third response message transmitted by the first terminal, the third response message being configured to indicate that the first terminal successfully received the first notification message.

Optionally, the receiving and transmitting unit is further configured to: transmit a third request message to the third terminal, the third request message being configured for the second terminal to request for establishing the dialogue between the second terminal and the third terminal; and receive a fourth response message transmitted by the third terminal, the fourth response message being configured to indicate that the third terminal successfully received the third request message.

Optionally, the receiving and transmitting unit is further configured to receive a fifth response message transmitted by the third terminal, and the fifth response message is configured to indicate that the third terminal attempted to establish the dialogue between the third terminal and the second terminal.

Optionally, the second terminal further includes a processing unit, which is configured to establish the dialogue between the second terminal and the third terminal based on the fifth response message.

Optionally, the receiving and transmitting unit is further configured to transmit a fourth request message to the third terminal, and the fourth request message is configured to indicate that the second terminal successfully received the fourth response.

Optionally, the receiving and transmitting unit is also configured to: transmit a second notification message to the first terminal, the second notification message being configured to indicate whether the dialogue between the second terminal and the third terminal is successful; and receive a fourth response message transmitted by the first terminal, the fourth response message being configured to indicate that the first terminal successfully received the second notification message.

Embodiments of a fifth aspect of the present invention propose a communication apparatus, which includes a processor and a memory. The memory stores computer programs, and the processor is configured to execute the computer programs stored in the memory to enable the communication apparatus to execute the method according to any aspect of the first aspect and the second aspect.

Embodiments of a sixth aspect of the present invention proposes a non-transitory computer-readable storage medium storing computer instructions, which, when executed, allow the method according to any aspect of the first aspect and the second aspect to be implemented.

Embodiments of a seventh aspect of the present invention propose a chip, including one or more interfaces and one or more processors. The interface is configured to receive a signal from a memory of an electronic apparatus and transmit the signal to a processor, and the signal includes computer instructions stored in the memory, which, when executed by the processor, allow the electronic apparatus to execute the method according to any aspect of the first aspect and the second aspect.

In summary, the blind transfer method according to the present invention is executed by the first terminal and includes: under the first condition, transmitting the first request message to the second terminal, the first request message being configured to request for releasing the dialogue resources between the first terminal and the second terminal, in which the first condition is that the dialogue between the second terminal and the third terminal is successful; and receiving the first response message transmitted by the second terminal, the first response message being configured to indicate that the second terminal successfully receives the first request message. The solution of the present invention solves the problem that the dialogue resources are not released when the dialogue between the first terminal and the second terminal ends through transmitting the first request message to the second terminal under the first condition, reducing the waste of communication resources, and avoiding the problem that the dialogue resources between the first terminal and the second terminal are still needed to be used in business but have already been released, so as to improve the stability of the blind transfer.

It should be understood that the general description above and the detailed description following are only illustrative and explanatory, and cannot limit the present invention.

### BRIEF DESCRIPTION OF THE DRAWINGS

Accompanying drawings here are incorporated into the specification and form a part of the specification, illustrate embodiments in accordance with the present invention and are configured to explain principles of the present invention together with the specification, rather than constituting an improper limitation on the present invention.
Fig. 1 shows an application scenario of a blind transfer method according to embodiments of the present invention.
Fig. 2 is a flow chart of a blind transfer method according to embodiments of the present invention.
Fig. 3 is a flow chart of another blind transfer method according to embodiments of the present invention.
Fig. 4 is a flow chart of another blind transfer method according to embodiments of the present invention.
Fig. 5 is a flow chart of another blind transfer method according to embodiments of the present invention.
Fig. 6 is an interactive schematic diagram of a blind transfer according to embodiments of the present invention.
Fig. 7 is a schematic diagram of a blind transfer according to embodiments of the present invention.
Fig. 8 is a schematic diagram of a first terminal according to embodiments of the present invention.
Fig. 9 is a schematic diagram of a second terminal according to embodiments of the present invention.
Fig. 10 is a schematic diagram of a communication apparatus according to embodiments of the present invention.
Fig. 11 is a schematic diagram of a chip according to embodiments of the present invention.

### DETAILED DESCRIPTION

Illustrative embodiments will be described herein in detail, examples of which are illustrated in the accompanying drawings. When the following description refers to the drawings, the same numerals in different drawings represent the same or similar elements, unless otherwise indicated. The implementations described in the following illustrative embodiments do not represent all the possible implementations consistent with the present invention. On the contrary, they are only examples of apparatuses and methods as detailed in the attached claims and consistent with some aspects of the present invention.

The terms used in the embodiments of the present invention are only for the purpose of describing specific embodiments, and are not intended to limit the embodiments of the present invention. The singular forms "a" and "the" used in the embodiments of the present invention and attached claims are also intended to include the plural form, unless the context clearly indicates other meanings. It should also be understood that the term "and/or" used in the text refers to and includes any or all possible combinations of one or more related listed items.

It should be understood that although the embodiments of the present invention may use terms: first, second, third, etc. to describe various information, such information should not be limited to these terms. These terms are only used to distinguish information of the same type from each other. For example, without departing from the scope of the embodiments of the present invention, the first information may also be referred to as the second information, and similarly, the second information may also be referred to as the first information. Depending on the context, the words "if" and "in case" used here can be interpreted as "when" or "as" or "in response to determining".

Session Initiation Protocol (SIP) and 3GPP TS24 series protocols both stipulate session businesses. The 3GPP TS24 series protocol and a RFC 535 protocol in SIP stipulate that after the blind transfer, terminals that dialogue with each other before the blind transfer will still communicate. Therefore, after receiving a BYE message, session resources before the blind transfer will not be released. However, according to a RFC 3261 protocol, the session resources will be released after receiving the BYE message, which requires special handling of the blind transfer. There are several problems with this:
(1) The stipulation of 3GPP TS24 and RFC 535 in SIP may conflict with the RFC 3261 protocol, which is the main protocol of SIP;
(2) There may be a phenomenon that the telephone has been hung up but the dialog still exists; and
(3) Additional processing is required in implementation, such as needing to save session related information additionally and release session information additionally, etc., resulting in high complexity.

Before introducing the detailed solution of the present invention, a scenario in which the solution of the present invention is applied is described.

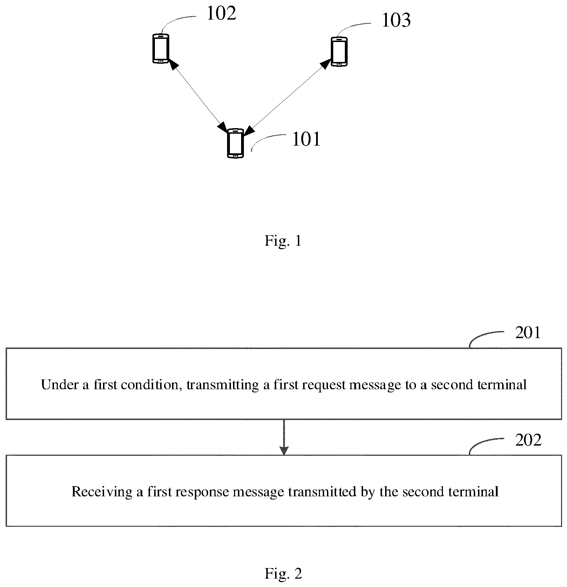

As shown in Fig. 1, a dialogue has been established between a first terminal 101 and a second terminal 102. Due to business changes or that the first terminal 101 cannot provide services required by the second terminal 102, the first terminal 101 can perform the blind transfer of the dialogue at this time, so that the second terminal 102 can establish a dialogue with a third terminal 103 that can provide the corresponding services.

In some embodiments, the first terminal 101, the second terminal 102, and the third terminal 103 above can be at least one of a mobile phone, a wearable apparatus, an Internet of Things apparatus, a vehicle with communication capabilities, a smart vehicle, a Pad, a computer with wireless receiving and transmitting capabilities, a virtual reality (VR) terminal, an augmented reality (AR) terminal, a wireless terminal in industrial control, a wireless terminal in self-driving, and a wireless terminal in remote medical surgery, but not limited to this.

It can be understood that the description of the embodiments of the present invention is for explaining more clearly the technical solution of the embodiments of the present invention, and does not constitute a limitation on the blind transfer method, the device, and the storage medium proposed in the embodiments of the present invention. As those ordinary skilled in the art know, with the evolution of the system architecture and the emergence of new business scenarios, the technical solution proposed in the embodiments of the present invention is also applicable to similar technical problems.

Fig. 2 is a flow chart of a blind transfer method according to embodiments of the present invention. As shown in Fig. 2, the blind transfer method is executed by the first terminal, and includes steps 201-202.

In step 201, under a first condition, a first request message is transmitted to the second terminal.

In some embodiments, the first terminal is a Transferor terminal, i.e. a terminal that has already engaged a dialogue with the second terminal. In other words, the first terminal is a terminal that initiates the blind transfer.

In some embodiments, the second terminal is a Transferee terminal, i.e. a terminal initiating the dialogue. In other words, the second terminal is a terminal whose dialogue target changes.

In some embodiments, the third terminal is a Transfer Target terminal, i.e. a terminal that establishes a dialogue with the second terminal after the blind transfer.

In some embodiments, the first terminal transmits the first request message to the second terminal under the first condition to request for releasing dialogue resources between the first terminal and the second terminal.

In some embodiments, the first request message is configured to request for releasing the dialogue resources between the first terminal and the second terminal.

In some embodiments, the first request message includes at least a BYE signaling.

In some embodiments, the first condition is that the dialogue between the second terminal and the third terminal is successful, i.e., the dialogue resources between the first terminal and the second terminal can no longer be used.

In some embodiments, the first terminal can transmit the first request message to the second terminal by transmitting the first request message to a control entity corresponding to a Call Session Control Function (CSCF) network element, but not limited to this. The first request message can also be transmitted to the second terminal in other manners, which is not limited in the present invention.

In step 202, a first response message transmitted by the second terminal is received.

In some embodiments, the first terminal receives the first response message transmitted by the second terminal to determine that the second terminal successfully received the first request message.

In some embodiments, the first response message is configured to indicate that the second terminal successfully receives the first request message.

In some embodiments, the first response message includes at least an OK signaling, and a status code of the OK signaling can be status codes of 200, 201, etc., indicating successful processing.

Optionally, in some embodiments, the first terminal receives the first response message transmitted by the second terminal, and the first terminal releases the dialogue resources with the second terminal.

In some embodiments, the first terminal can receive the first response message transmitted by the second terminal by receiving the first response message forwarded by the control entity corresponding to the CSCF network element, but not limited to this. The first response message transmitted by the second terminal can also be received in other manners, which is not limited in the present invention.

In summary, the blind transfer method according to the present invention is executed by the first terminal and includes: under the first condition, transmitting the first request message to the second terminal, wherein the first condition is that the dialogue between the second terminal and the third terminal is successful, and the first request message is configured to request for releasing the dialogue resources between the first terminal and the second terminal; receiving the first response message transmitted by the second terminal, the first response message being configured to indicate that the second terminal successfully receives the first request message. The solution of the present invention solves the problem that the dialogue resources between the first terminal and the second terminal are not released when the blind transfer ends by transmitting the first request message to the second terminal under the first condition, thus reducing the waste of communication resources, and avoiding the problem that the dialogue resources between the first terminal and the second terminal are still needed to be used in the blind transfer but have already been released, so as to improve the stability of the blind transfer.

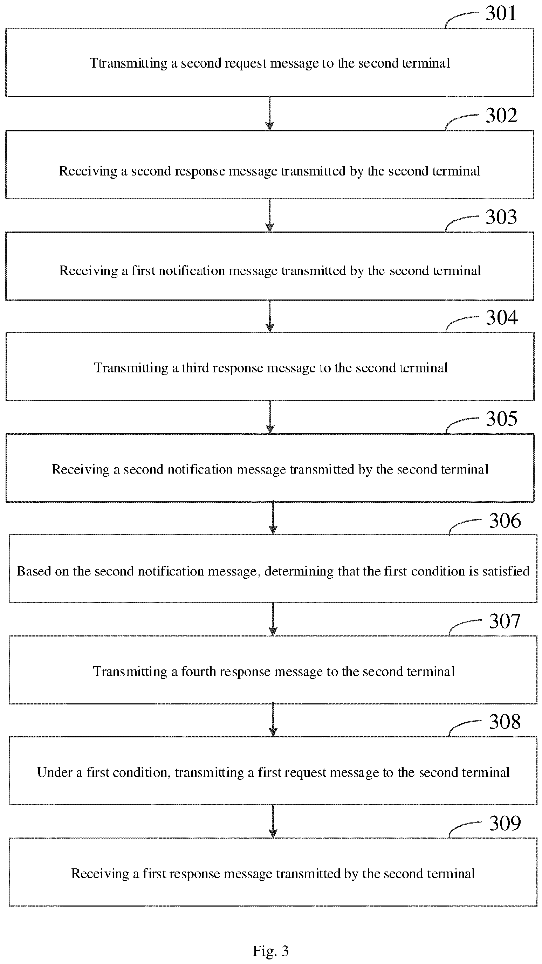

Fig. 3 is a flow chart of a blind transfer method according to embodiments of the present invention. As shown in Fig. 3, based on the embodiment shown in Fig. 1, further explanation is provided. The blind transfer method includes steps 301-309.

In step 301, a second request message is transmitted to the second terminal.

In some embodiments, the first terminal transmits the second request message to the second terminal to request the second terminal to establish the dialogue with the third terminal.

In some embodiments, the first terminal transmits the second request message to the second terminal through the dialogue resources with the second terminal.

In some embodiments, the second request message is configured to request the second terminal to establish the dialogue with the third terminal.

In some embodiments, the second request message can be a REFER message, and the second request message includes at least a Refer-to signaling.

In some embodiments, the first terminal can transmit the second request message to the second terminal by transmitting the second request message to the control entity corresponding to the CSCF network element, but not limited to this. The second request message can also be transmitted to the second terminal in other manners, which is not limited in the present invention.

For example, the dialogue has already been established between the first terminal and the second terminal. The first terminal transmits the REFER message to the second terminal to request the second terminal to establish the dialogue with the third terminal. The Refer-to signaling in the REFER message is Referring to C, and C is a third terminal identification.

In step 302, the second response message transmitted by the second terminal is received.

In some embodiments, the first terminal receives the second response message transmitted by the second terminal to determine that the second terminal successfully receives the second request message, so as to prevent the first terminal from continuously transmitting the second request message to the second terminal, thus reducing the resource waste.

In some embodiments, the second response message is configured to indicate that the second terminal successfully receives the second request message.

In some embodiments, the second response message includes an OK signaling or an Accepted signaling, a status code of which can be the status code of 200, 202, etc., indicating successful processing. The OK signaling or the Accepted signaling should include an indicator of the second request message to indicate that the second response message corresponds to the second request message.

In some embodiments, the first terminal can receive the second response message transmitted by the second terminal by receiving the second response message transmitted by the control entity corresponding to the CSCF network element, but not limited to this. The second response message transmitted by the second terminal can also be received in other manners, which is not limited in the present invention.

For example, the first terminal receives the second response message transmitted by the second terminal, the second response message includes a 200OK_{REFER} signaling, and REFER is the indicator of the second request message.

In step 303, the first terminal receives a first notification message transmitted by the second terminal.

In some embodiments, the first terminal receives the first notification message transmitted by the second terminal to notify the first terminal that the second terminal tries to establish the dialogue with the third terminal, so as to prevent the first terminal from continuously transmitting the second request message, thus reducing the resource waste.

In some embodiments, the first notification message is configured to notify the first terminal that the second terminal tries to establish the dialogue with the third terminal.

In some embodiments, the first notification message is a NOTIFY message, which includes a Trying signaling. A status code of the Trying signaling can be 100 to indicate that the second terminal successfully receives the second request message and tries to call the third terminal.

In some embodiments, the first terminal can receive the first notification message transmitted by the second terminal by receiving the first notification message transmitted by the control entity corresponding to the CSCF network element, but not limited to this. The first notification message transmitted by the second terminal can also be received in other manners, which is not limited in the present invention.

For example, the first terminal receives the NOTIFY message transmitted by the second terminal, and the NOTIFY message includes a 100Trying signaling.

In step 304, the first terminal transmits a third response message to the second terminal.

In some embodiments, the first terminal transmits the third response message to the second terminal to enable the second terminal to determine that the first terminal successfully receives the first notification message, so as to prevent the second terminal from continuously transmitting the first notification message, thus reducing the resource waste.

In some embodiments, the third response message is configured to indicate that the first terminal successfully receives the first notification message.

In some embodiments, the third response message includes an OK signaling, and a status code of the OK signaling can be the status code of 200, 202, etc., indicating successful processing.

In some embodiments, the first terminal can transmit the third response message to the second terminal by transmitting the third response message to the control entity corresponding to the CSCF network element, but not limited to this. The third response message can also be transmitted to the second terminal in other manners, which is not limited in the present invention.

For example, the first terminal transmits the third response message to the second terminal, and the third response message includes a 2000K signaling.

In step 305, the first terminal receives a second notification message transmitted by the second terminal.

In some embodiments, the first terminal receives the second notification message transmitted by the second terminal to enable the first terminal to determine whether the dialogue between the second terminal and the third terminal is successful.

In some embodiments, the second notification message is configured to indicate whether the dialogue between the second terminal and the third terminal is successful.

In some embodiments, the second notification message is a NOTIFY message, and the NOTIFY message includes an OK signaling. A status code of the OK signaling can be the status code of 200, 202, etc., indicating successful processing, so as to indicate that the dialogue between the second terminal and the third terminal is successful.

In some embodiments, the second notification message is a NOTIFY message, and a status codes of the signaling in the NOTIFY message is a status code of 415, 480, etc., indicating that the establishment of the dialogue is failed, so as to indicate that the dialogue between the second terminal and the third terminal is failed. The first terminal can transmit the second request message to the second terminal again or replace the third terminal.

In some embodiments, the first terminal can receive the second notification message transmitted by the second terminal by receiving the second notification message transmitted by the control entity corresponding to the CSCF network element, but not limited to this. The second notification message transmitted by the second terminal can also be received in other manners, which is not limited in the present invention.

For example, the first terminal receives a NOTIFY message transmitted by the second terminal, and the NOTIFY message includes a 2000K signaling.

In step 306, the first terminal determines that the first condition is satisfied based on the second notification message.

In some embodiments, the first terminal determines that the first condition is satisfied based on the second notification message, so as to release the dialogue resources with the second terminal.

In some embodiments, the first condition is that the dialogue between the second terminal and the third terminal is successful.

In some embodiments, when the second notification message transmitted by the second terminal and received by the first terminal includes the OK signaling, and the status code of the OK signaling can be the status code of 200, 202, etc., indicating successful processing, the first terminal determines that the first condition is satisfied.

For example, the NOTIFY message received by the first terminal includes the 2000K signaling, and the first terminal determines that the first condition is satisfied.

In step 307, the first terminal transmits a fourth response message to the second terminal.

In some embodiments, the first terminal transmits the fourth response message to the second terminal to enable the second terminal to determine that the first terminal successfully receives the second notification message.

In some embodiments, the fourth response message is configured to indicate that the first terminal successfully receives the second notification message.

In some embodiments, the fourth response message includes an OK signaling, and a status code of the OK signaling can be a status code of 200, 202, etc., indicating successful processing.

In some embodiments, the first terminal can receive the fourth response message transmitted by the second terminal by receiving the fourth response message transmitted by the control entity corresponding to the CSCF network element, but not limited to this. The fourth response message transmitted by the second terminal can also be received in other manners, which is not limited in the present invention.

For example, the first terminal receives the fourth response message transmitted by the second terminal, and the fourth response message includes the 200OK signaling.

In step 308, the first terminal transmits a first request message to the second terminal under the first condition.

In some embodiments, the first terminal transmits the first request message to the second terminal under the first condition, so as to request for releasing the dialogue resources between the first terminal and the second terminal.

In some embodiments, the first request message is configured to request for releasing the dialogue resources between the first terminal and the second terminal.

In some embodiments, the first request message includes at least a BYE signaling.

In some embodiments, the first condition is that the dialogue between the second terminal and the third terminal is successful, i.e., the dialogue resources between the first terminal and the second terminal can no longer be used.

In some embodiments, the first terminal can transmit the first request message to the second terminal by transmitting the first request message to the control entity corresponding to the CSCF network element, but not limited to this. The first request message can also be transmitted to the second terminal in other manners, which is not limited in the present invention.

For example, the first terminal determines that the dialogue between the second terminal and the third terminal is successful, and the first terminal transmits the first request message to the second terminal. The first request message includes the BYE signaling.

In step 309, the first terminal receives a first response message transmitted by the second terminal.

In some embodiments, the first terminal receives the first response message transmitted by the second terminal to determine that the second terminal successfully receives the first request message, so as to prevent the first terminal from continuously transmitting the first request message, thus reducing the resource waste.

In some embodiments, the first response message is configured to indicate that the second terminal successfully receives the first request message.

In some embodiments, the first response message includes an OK signaling, and a status code of the OK signaling can be the status code of 200, 201, etc., indicating successful processing.

Optionally, in some embodiments, the first terminal receives the first response message transmitted by the second terminal, and the first terminal releases the dialogue resources with the second terminal.

In some embodiments, the first terminal can receive the first response message transmitted by the second terminal by receiving the first response message forwarded by the control entity corresponding to the CSCF network element, but not limited to this. The first response message transmitted by the second terminal can also be received in other manners, which is not limited in the present invention.

For example, the first terminal receives the first response message transmitted by the second terminal, and the first response message includes the 200OK signaling.

In summary, the blind transfer method according to the present invention is executed by the first terminal and includes: under the first condition, transmitting the first request message to the second terminal, wherein the first condition is that the dialogue between the second terminal and the third terminal is successful, and the first request message is configured to request for releasing the dialogue resources between the first terminal and the second terminal; receiving the first response message transmitted by the second terminal, the first response message being configured to indicate that the second terminal successfully receives the first request message. Under the first condition, before transmitting the first request message to the second terminal, the method further includes: transmitting the second request message to the second terminal, the second request message being configured to request the second terminal to establish the dialogue with the third terminal; receiving the second response message transmitted by the second terminal, the second response message being configured to indicate that the second terminal successfully receives the second request message; receiving the first notification message transmitted by the second terminal, the first notification message being configured to notify the first terminal that the second terminal tries to establish the dialogue with the third terminal; transmitting the third response message to the second terminal, the third response message being configured to indicate that the first terminal successfully receives the first notification message; receiving the second notification message transmitted by the second terminal, the second notification message being configured to indicate whether the dialogue between the second terminal and the third terminal is successful; based on the second notification message, determining that the first condition is satisfied; transmitting the fourth response message to the second terminal, the fourth response message being configured to indicate that the first terminal successfully receives the second notification message. Thus, a blind transfer solution is implemented, which solves the problem that the dialogue resources between the first terminal and the second terminal are not released when the blind transfer ends, reducing the waste of communication resources, and avoiding the problem that the dialogue resources between the first terminal and the second terminal are still needed to be used in the blind transfer but have already been released, so as to improve the stability of the blind transfer.

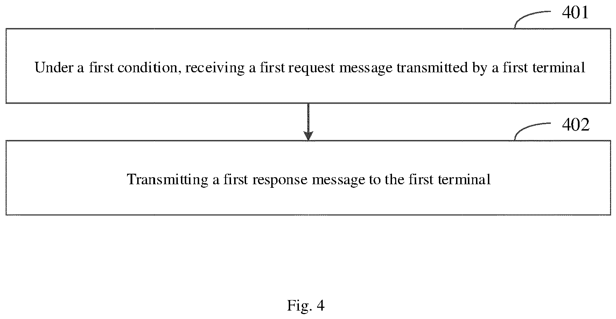

Fig. 4 is a flow chart of a blind transfer method according to embodiments of the present invention. As shown in Fig. 4, the blind transfer method is executed by the second terminal, and includes step 401 and step 402.

In step 401, under a first condition, the second terminal receives a first request message transmitted by a first terminal.

In some embodiments, the second terminal receives the first request message transmitted by the first terminal to release dialogue resources between the first terminal and the second terminal.

In some embodiments, the first terminal is a Transferor terminal, i.e. a terminal that has already engaged a dialogue with the second terminal. In other words, the first terminal is a terminal that initiates the blind transfer.

In some embodiments, the second terminal is a Transferee terminal, i.e. a terminal initiating a dialogue. In other words, the second terminal is a terminal whose dialogue target changes.

In some embodiments, the first request message is configured to request for releasing the dialogue resources between the first terminal and the second terminal.

In some embodiments, the first request message includes at least a BYE signaling.

In some embodiments, the first condition is that the dialogue between the second terminal and the third terminal is successful.

In some embodiments, the second terminal can receive the first request message through the control entity corresponding to the CSCF network element, to receive the first request message transmitted by the first terminal, but not limited to this. The first request message transmitted by the first terminal can be received in other manners, which is not limited in the present invention.

In step 402, the second terminal transmits a first response message to the first terminal.

In some embodiments, the second terminal transmits the first response message to the first terminal to enable the first terminal to determine that the second terminal successfully receives the first request message, so as to prevent the first terminal from continuously transmitting the first request message, thus reducing the resource waste.

In some embodiments, the first response message is configured to indicate that the second terminal successfully receives the first request message.

In some embodiments, the first response message includes at least an OK signaling, and a status code of the OK signaling can be the status code of 200, 201, etc., indicating successful processing.

In some embodiments, the first terminal can transmit the first response message to the second terminal by transmitting the first response message to the control entity corresponding to the CSCF network element, but not limited to this. The first response message can also be transmitted to the second terminal in other manners, which is not limited in the present invention.

In summary, the blind transfer method according to the present invention is executed by the second terminal and includes: under the first condition, receiving the first request message transmitted by the first terminal, the first request message being configured to request for releasing the dialogue resources between the first terminal and the second terminal; transmitting the first response message to the first terminal, the first response message being configured to indicate that the second terminal successfully receives the first request message. Thus, the problem that the dialogue resources between the first terminal and the second terminal are not released when the blind transfer ends is solved, which reduces the waste of communication resources, and avoids the problem that the dialogue resources between the first terminal and the second terminal are still needed to be used in the blind transfer but have already been released, thus improving the stability of the blind transfer.

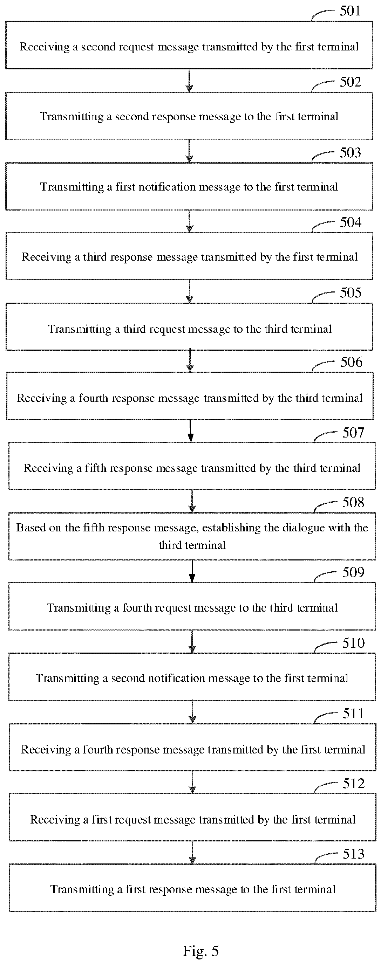

Fig. 5 is a flow chart of a blind transfer method according to embodiments of the present invention. As shown in Fig. 5, based on the embodiment shown in Fig. 4, further explanation is provided. The blind transfer method includes steps 501-513.

In step 501, the second terminal receives a second request message transmitted by the first terminal.

In some embodiments, the second terminal receives the second request message transmitted by the first terminal, so as to establish a dialogue with a third terminal.

In some embodiments, the second request message is configured to request the second terminal to establish the dialogue with the third terminal.

In some embodiments, the second request message can be a REFER message, and the second request message includes at least a Refer-to signaling.

In some embodiments, the second terminal can receive the second request message transmitted by the first terminal by receiving the second request message transmitted by the control entity corresponding to the CSCF network element, but not limited to this. The second request message transmitted by the first terminal can also be received in other manners, which is not limited in the present invention.

For example, the dialogue has already been established between the first terminal and the second terminal. The second terminal receives the REFER message transmitted by the first terminal to establish the dialogue with the third terminal. The Refer-to signaling in the REFER message is Referring to C, and C is a third terminal identification.

In step 502, the second terminal transmits a second response message to the first terminal.

In some embodiments, the second terminal transmits the second response message to the first terminal to enable the first terminal to determine that the second terminal successfully receives the second request message, so as to prevent the first terminal from continuously transmitting the second request message, thus reducing the resource waste.

In some embodiments, the second response message is configured to indicate that the second terminal successfully receives the second request message.

In some embodiments, the second response message includes an OK signaling or an Accepted signaling, a status code of which can be the status code of 200, 202, etc., indicating successful processing. The OK signaling or the Accepted signaling should include an indicator of the second request message to indicate that the second response message corresponds to the second request message.

In some embodiments, the second terminal can transmit the second response message to the first terminal by transmitting the second response message to the control entity corresponding to the CSCF network element, but not limited to this. The second response message can also be transmitted to the first terminal in other manners, which is not limited in the present invention.

For example, the second terminal transmits the second response message to the first terminal, the second response message includes a 200OK_{REFER} signaling, and REFER is the indicator of the second request message.

In step 503, the second terminal transmits a first notification message to the first terminal.

In some embodiments, the second terminal transmits the first notification message to the first terminal to notify the first terminal that the second terminal tries to establish the dialogue with the third terminal, so as to prevent the first terminal from continuously transmitting the second request message, thus reducing the resource waste.

In some embodiments, the first notification message is configured to notify the first terminal that the second terminal tries to establish the dialogue with the third terminal.

In some embodiments, the first notification message is a NOTIFY message, and the NOTIFY message includes a Trying signaling. A status code of the Trying signaling can be 100 to indicate that the second terminal successfully receives the second request message and tries to call the third terminal.

In some embodiments, the second terminal can transmit the first notification message through the control entity corresponding to the CSCF network element, to transmit the first notification message to the second terminal, but not limited to this. The first notification message can also be transmitted to the second terminal in other manners, which is not limited in the present invention.

For example, the second terminal transmits the NOTIFY message to the first terminal, and the NOTIFY message includes the 100Trying signaling.

In step 504, the second terminal receives a third response message transmitted by the first terminal.

In some embodiments, the second terminal receives the third response message transmitted by the first terminal to determine that the first terminal successfully receives the first notification message, so as to prevent the second terminal from continuously transmitting the first notification message, thus reducing the resource waste.

In some embodiments, the third response message is configured to indicate that the first terminal successfully receives the first notification message.

In some embodiments, the third response message includes an OK signaling, a status code of the OK signaling can be the status code of 200, 202, etc., indicating successful processing.

In some embodiments, the second terminal can receive the third response message through the control entity corresponding to the CSCF network element, to receive the third response message transmitted by the first terminal, but not limited to this. The third response message transmitted by the first terminal can also be received in other manners, which is not limited in the present invention.

For example, the second terminal receives the third response message transmitted by the first terminal, and the third response message includes the 200OK signaling.

In step 505, the second terminal transmits a third request message to the third terminal.

In some embodiments, the second terminal transmits the third request message to the third terminal to request for establishing the dialogue with the third terminal.

In some embodiments, the third request message is configured for the second terminal to request for establishing the dialogue with the third terminal

In some embodiments, the third request message is an INVITE message, and the INVITE message can include an ECT dialogue identifier URL or a third terminal identification, to identify that the third request message is that the second terminal requests to establish the dialogue with the third terminal.

In some embodiments, the second terminal can transmit the third request message through the control entity corresponding to the CSCF network element, to transmit the third request message to the third terminal, but not limited to this. The third request message can also be transmitted to the third terminal in other manners, which is not limited in the present invention.

For example, the second terminal transmits the INVITE message to the third terminal, and the INVITE message includes a private dialogue identifier (private URL), to identify that the INVITE message is that the second terminal requests to establish the dialogue with the third terminal.

In step 506, the second terminal receives a fourth response message transmitted by the third terminal.

In some embodiments, the second terminal receives the fourth response message transmitted by the third terminal to enable the second terminal to determine that the third terminal successfully receives the third request message, so as to prevent the second terminal from continuously transmitting the third request message, thus reducing the resource waste.

In some embodiments, the fourth response message is configured to indicate that the third terminal successfully receives the third request message.

In some embodiments, the fourth response message includes an OK signaling, and a status code of the OK signaling can be the status code of 200, 202, etc., indicating successful processing.

In some embodiments, the second terminal can receive the fourth response message through the control entity corresponding to the CSCF network element, to receive the fourth response message transmitted by the third terminal, but not limited to this. The fourth response message transmitted by the third terminal can also be received in other manners, which is not limited in the present invention.

For example, the second terminal receives the fourth response message transmitted by the third terminal, and the fourth response message includes the 200OK signaling.

In step 507, the second terminal receives a fifth response message transmitted by the third terminal.

In some embodiments, the second terminal receives the fifth response message transmitted by the third terminal to notify the second terminal that the third terminal tries to establish the dialogue with the second terminal.

In some embodiments, the fifth response message is configured to indicate that the third terminal tries to establish the dialogue with the second terminal.

In some embodiments, the fifth response message includes a Trying signaling.

In some embodiments, the second terminal can receive the fifth response message through the control entity corresponding to the CSCF network element, to receive the fifth response message transmitted by the third terminal, but not limited to this. The fifth response message transmitted by the third terminal may also be received in other manners, which is not limited in the present invention.

For example, the second terminal receives the fifth response message transmitted by the third terminal, and the fifth response message includes the Trying signaling.

In step 508, the second terminal establishes the dialogue with the third terminal based on the fifth response message.

In some embodiments, the second terminal receives the fifth response message transmitted by the third terminal, determines that the third terminal tries to establish the dialogue with the second terminal, and establishes the dialogue with the third terminal.

In step 509, the second terminal transmits a fourth request message to the third terminal.

In some embodiments, the second terminal transmits the fourth request message to the third terminal to enable the third terminal to determine that the second terminal successfully receives the fourth response message, so as to prevent the third terminal from continuously transmitting the fourth response message, thus reducing the resource waste.

In some embodiments, the fourth request message is configured to indicate that the second terminal successfully receives the fourth response message.

In some embodiments, the fourth request message includes an ACK signaling, and the ACK signaling is used in conjunction with the INVITE signaling, for confirming that a final response to the INVITE message has been received, i.e. the fourth response message.

In some embodiments, the second terminal can transmit the fourth request message through the control entity corresponding to the CSCF network element, to transmit the fourth request message to the third terminal through, but not limited to this. The fourth request message can also be transmitted to the third terminal in other manners, which is not limited in the present invention.

For example, the second terminal transmits the fourth request message to the third terminal, and the fourth request message includes the ACK signaling.

In some embodiments, there is no restriction on the execution order of step 509 and step 508. The second terminal can execute step 508 first and then execute step 509, or execute step 509 first and then execute the step 508, or execute step 508 and step 509 simultaneously.

In step 510, the second terminal transmits a second notification message to the first terminal.

In some embodiments, the second terminal transmits the second notification message to the first terminal to enable the first terminal to determine whether the dialogue between the second terminal and the third terminal is successful.

In some embodiments, the second notification message is configured to indicate whether the dialogue between the second terminal and the third terminal is successful.

In some embodiments, the second notification message is a NOTIFY message, the NOTIFY message includes an OK signaling, and a status code of the OK signaling can be the status code of 200, 202, etc., indicating successful processing, to indicate that the dialogue between the second terminal and the third terminal is successful.

In some embodiments, the second notification message is a NOTIFY message, and a status codes of the signaling in the NOTIFY message is the status code of 415, 480, etc., indicating that the establishment of the dialogue is failed, to indicate that the dialogue between the second terminal and the third terminal is failed.

In some embodiments, the second terminal can transmit the second notification message to the first terminal by transmitting the second notification message to the control entity corresponding to the CSCF network element, but not limited to this. The second notification message can also be transmitted to the first terminal in other manners, which is not limited in the present invention.

For example, the second terminal transmits the NOTIFY message to the first terminal, and the NOTIFY message includes the 200OK signaling.

In step 511, the second terminal receives the fourth response message transmitted by the first terminal.

In some embodiments, the second terminal receives the fourth response message transmitted by the first terminal to determine that the first terminal successfully receives the second notification message.

In some embodiments, the fourth response message is configured to indicate that the first terminal successfully receives the second notification message.

In some embodiments, the fourth response message includes an OK signaling, and a status code of the OK signaling can be the status code of 200, 202, etc., indicating successful processing.

In some embodiments, the second terminal can transmit the fourth response message to the second terminal by transmitting the fourth response message to the control entity corresponding to the CSCF network element, but not limited to this. The fourth response message can also be transmitted to the second terminal in other manners, which is not limited in the present invention.

For example, the second terminal transmits the fourth response message to the first terminal, and the fourth response message includes the 200OK signaling.

In step 512, under the first condition, the second terminal receives the first request message transmitted by the first terminal.

In some embodiments, the second terminal receives the first request message transmitted by the first terminal to release the dialogue resources between the first terminal and the second terminal.

In some embodiments, the first request message is configured to request for releasing the dialogue resources between the first terminal and the second terminal.

In some embodiments, the first request message includes at least the BYE signaling.

In some embodiments, the first condition is that the dialogue between the second terminal and the third terminal is successful.

In some embodiments, the first terminal can receive the first request message transmitted by the first terminal by receiving the first request message transmitted by the control entity corresponding to the CSCF network element, but not limited to this. The first request message transmitted by the first terminal can also be received in other manners, which is not limited in the present invention.

For example, the second terminal receives the first request message transmitted by the first terminal, and the first request message includes the BYE signaling.

In step 513, the second terminal transmits the first response message to the first terminal.

In some embodiments, the second terminal transmits the first response message to the first terminal to enable the first terminal to determine that the second terminal successfully receives the first request message, so as to prevent the first terminal from continuously transmitting the first request message, thus reducing the resource waste.

In some embodiments, the first response message includes an OK signaling, and a status code of the OK signaling can be the status code of 200, 201, etc., indicating successful processing.

Optionally, in some embodiments, the first terminal receives the first response message transmitted by the second terminal, and the first terminal releases the dialogue resources with the second terminal.

In some embodiments, the second terminal can transmit the first response message to the second terminal by transmitting the first response message to the control entity corresponding to the CSCF network element, but not limited to this. The first response message can also be transmitted to the second terminal in other manners, which is not limited in the present invention.

For example, the second terminal transmits the first response message to the first terminal, and the first response message includes the 200OK signaling.

In summary, the blind transfer method according to the present invention is executed by the second terminal and includes: receiving the first request message transmitted by the first terminal, the first request message being configured to request for releasing the dialogue resources between the first terminal and the second terminal; transmitting the first response message to the first terminal, the first response message being configured to indicate that the second terminal successfully receives the first request message. Before receiving the first request message transmitted by the first terminal, the method further includes: receiving the second request message transmitted by the first terminal, the second request message being configured to request the second terminal to establish the dialogue with the third terminal; transmitting the second response message to the first terminal, the second response message being configured to indicate that the second terminal successfully receives the second request message; transmitting the first notification message to the first terminal, the first notification message being configured to notify the first terminal that the second terminal tries to establish the dialogue with the third terminal; receiving the third response message transmitted by the first terminal, the third response message being configured to indicate that the first terminal successfully receives the first notification message; transmitting the third request message to the third terminal, the third request message being configured for the second terminal to request for establishing the dialogue with the third terminal; receiving the fourth response message transmitted by the third terminal, the fourth response message being configured to indicate that the third terminal successfully receives the third request message; receiving the fifth response message transmitted by the third terminal, the fifth response message being configured to indicate that the third terminal tries to establish the dialogue with the second terminal; based on the fifth response message, establishing the dialogue with the third terminal; transmitting the fourth request message to the third terminal, the fourth request message being configured to indicate that the second terminal successfully receives the fourth response message; transmitting the second notification message to the first terminal, the second notification message being configured to indicate whether the dialogue between the second terminal and the third terminal is successful; receiving the fourth response message transmitted by the first terminal, the fourth response message being configured to indicate that the first terminal successfully receives the second notification message. Thus, a blind transfer solution is implemented, which solves the problem that the dialogue resources between the first terminal and the second terminal are not released when the blind transfer ends, thus reducing the waste of communication resources, and avoiding the problem that the dialogue resources between the first terminal and the second terminal are still needed to be used in the blind transfer but have already been released, so as to improve the stability of the blind transfer.

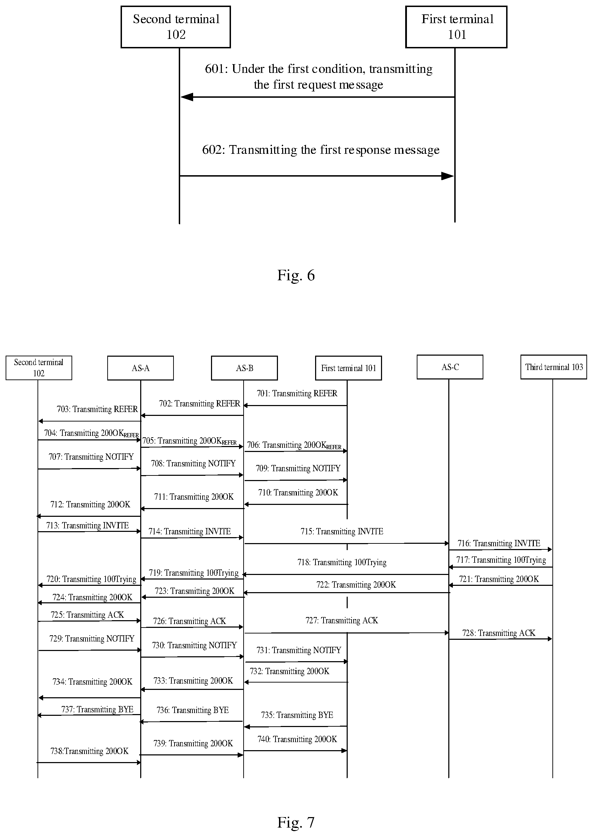

Fig. 6 is an interactive schematic diagram of a blind transfer method according to embodiments of the present invention. As shown in Fig. 6, the blind transfer method includes step 601 and step 602.

In step 601, a first terminal transmits a first request message to a second terminal under a first condition.

In some embodiments, the first terminal transmits the first request message to the second terminal under the first condition, to request for releasing dialogue resources between the first terminal and the second terminal.

In some embodiments, the first request message is configured to request for releasing the dialogue resources between the first terminal and the second terminal.

In some embodiments, the first request message includes at least a BYE signaling.

In some embodiments, the first condition is that the dialogue between the second terminal and the third terminal is successful, i.e., the dialogue resources between the first terminal and the second terminal can no longer be used.

In step 602, the second terminal transmits a first response message to the first terminal.

In some embodiments, the second terminal transmits the first response message to the first terminal to enable the first terminal to determine that the second terminal successfully receives the first request message, so as to prevent the first terminal from continuously transmitting the first request message, thus reducing the resource waste.

In some embodiments, the first response message is configured to indicate that the second terminal successfully receives the first request message.

In some embodiments, the first response message includes at least an OK signaling, and a status code of the OK signaling can be the status code of 200, 201, etc., indicating successful processing.

The relevant descriptions of step 601 and step 602 can refer to the above embodiments and related descriptions shown in Fig. 2 to Fig. 5, which will not be detailed here.

The solution of the present invention solves the problem that the dialogue resources between the first terminal and the second terminal are not released when the blind transfer ends through transmitting the first request message to the second terminal under the first condition, reducing the waste of communication resources, and avoiding the problem that the dialogue resources between the first terminal and the second terminal are still needed to be used in the blind transfer but have already been released, so as to improve the stability of the blind transfer.

Therefore, the solution has the following beneficial effects.

The solution solves the problem that the dialogue resources between the first terminal and the second terminal are not released when the blind transfer ends by determining that the first condition is satisfied, i.e., the dialogue between the second terminal and the second terminal is successful, that is, when the dialogue resources between the first terminal and the second terminal can no longer be used, the first request message is transmitted by the first terminal, and the dialogue resources between the first terminal and the second terminal are released, which reduces the waste of communication resources and avoids the problem that the dialogue resources between the first terminal and the second terminal are still needed to be used in the blind transfer but have already been released, thus improving the stability of the blind transfer, and avoiding protocol conflicts.

Fig. 7 is a schematic diagram of a blind transfer according to embodiments of the present invention. As shown in Fig. 7, AS-A, AS-B, and AS-C are control entities corresponding to the CSCF network element.

In step 701, the first terminal transmits a REFER message to the AS-B.

In some embodiments, the first terminal transmits the REFER message to the AS-B, the REFER message includes a Refer-To-C signaling, and C is the third terminal identification.

In some embodiments, the AS-B determines whether the first terminal can perform the blind transfer. If it is determined that the blind transfer can be performed, the AS-B generates an ECT session identifier URL to identify a new dialogue address, i.e. the third terminal.

In step 702, the AS-B transmits the REFER message to the AS-A.

In some embodiments, the AS-B transmits the REFER message to the AS-A, the REFER message includes the URL generated by the AS-B, i.e. a Refer-To-private-URL.

In some embodiments, the AS-B determines whether the REFER message can be transmitted to the second terminal.

In step 703, the AS-A transmits the REFER message to the second terminal.

In some embodiments, the AS-A transmits the REFER message to the second terminal to achieve to establish the dialogue between the first terminal, the second terminal, and the third terminal.

In step 704, the second terminal transmits a 200OK_{REFER} signaling to the AS-A.

In some embodiments, the second terminal transmits the 200OK_{REFER} signaling to the AS-A to indicate that the second terminal successfully receives the REFER message.

In step 705, the AS-A transmits the 200OK_{REFER} signaling to the AS-B.

In some embodiments, the AS-A transmits the 200OK_{REFER} signaling to the AS-B to indicate that the second terminal successfully receives the REFER message.

In step 706, the AS-B transmits the 200OK_{REFER} signaling to the first terminal.

In some embodiments, the AS-B transmits the 200OK_{REFER} signaling to the first terminal to indicate that the second terminal successfully receives the REFER message.

In step 707, the second terminal transmits a NOTIFY message to the AS-A.

In some embodiments, the second terminal transmits the NOTIFY message to the AS-A to indicate that the second terminal tries to dialogue with the third terminal.

In some embodiments, the NOTIFY message includes a Trying signaling, and a status code of the Trying signaling is 100.

In step 708, the AS-A transmits the NOTIFY message to the AS-B.

In some embodiments, the AS-A transmits the NOTIFY message to the AS-B to indicate that the second terminal tries to dialogue with the third terminal.

In some embodiments, the NOTIFY includes the Trying signaling, and the status code of the Trying signaling is 100.

In step 709, the AS-B transmits the NOTIFY message to the first terminal.

In some embodiments, the AS-B transmits the NOTIFY message to the first terminal to indicate that the second terminal tries to dialogue with the third terminal.

In some embodiments, the NOTIFY message includes the Trying signaling, and the status code of the Trying signaling is 100.

In step 710, the first terminal transmits a 200OK signaling to the AS-B.

In some embodiments, the first terminal transmits the 200OK signaling to the AS-B to indicate that the first terminal successfully receives the NOTIFY message.

In step 711, the AS-B transmits the 200OK signaling to the AS-A.

In some embodiments, the AS-B transmits the 200OK signaling to the AS-A to indicate that the first terminal successfully receives the NOTIFY message.

In step 712, the AS-A transmits the 200OK signaling to the second terminal.

In some embodiments, the AS-A transmits the 200OK signaling to the second terminal to indicate that the first terminal successfully receives the NOTIFY message.

In step 713, the second terminal transmits an INVITE message to the AS-A.

In some embodiments, the second terminal transmits the INVITE message to the AS-A to indicate that the second terminal requests to establish the dialogue with the third terminal.

In some embodiments, the INVITE message includes the above ECT session identifier URL, i.e. including a To-private-URL.

In step 714, the AS-A transmits the INVITE message to the AS-B.

In some embodiments, the AS-A transmits the INVITE message to the AS-B to indicate that the second terminal requests to establish the dialogue with the third terminal.

In step 715, the AS-B transmits the INVITE message to the AS-C.

In some embodiments, the AS-B transmits the INVITE message to the AS-C to indicate that the second terminal requests to establish the dialogue with the third terminal.

In some embodiments, the INVITE message includes the third terminal identifier, i.e. To-C, and C is the third terminal identification.

In step 716, the AS-C transmits the INVITE message to the third terminal.

In some embodiments, the AS-C transmits the INVITE message to the third terminal to indicate that the second terminal requests to establish the dialogue with the third terminal.

In step 717, the third terminal transmits a 100Trying signaling to the AS-C.

In some embodiments, the third terminal transmits the 100Trying signaling to the AS-C to indicate that the third terminal tries to establish the dialogue with the second terminal.

In step 718, the AS-C transmits the 100Trying signaling to the AS-B.

In some embodiments, the AS-C transmits the 100Trying signaling to the AS-B to indicate that the third terminal tries to establish the dialogue with the second terminal.

In step 719, the AS-B transmits the 100Trying signaling to the AS-A.

In some embodiments, the AS-B transmits the 100Trying signaling to the AS-A to indicate that the third terminal tries to establish the dialogue with the second terminal.

In step 720, the AS-A transmits the 100Trying signaling to the second terminal.

In some embodiments, the AS-A transmits the 100Trying signaling to the second terminal to indicate that the third terminal tries to establish the dialogue with the second terminal.

In step 721, the third terminal transmits a 200OK signaling to the AS-C.

In some embodiments, the third terminal transmits the 200OK signaling to the AS-C to indicate that the third terminal successfully receives the INVITE message transmitted by the second terminal.

In step 722, the AS-C transmits the 200OK signaling to the AS-B.

In some embodiments, the AS-C transmits the 200OK signaling to the AS-B to indicate that the third terminal successfully receives the INVITE message transmitted by the second terminal.

In step 723, the AS-B transmits the 200OK signaling to the AS-A.

In some embodiments, the AS-B transmits the 200OK signaling to the AS-A to indicate that the third terminal successfully receives the INVITE message transmitted by the second terminal.

In step 724, the AS-A transmits the 200OK signaling to the second terminal.

In some embodiments, the AS-A transmits the 200OK signaling to the second terminal to indicate that the third terminal successfully receives the INVITE message transmitted by the second terminal.

In some embodiments, the second terminal receives the 200OK signaling transmitted by the third terminal and establishes the dialogue with the third terminal.

In step 725, the second terminal transmits an ACK signaling to the AS-A.

In some embodiments, the second terminal transmits the ACK signaling to the AS-A to indicate that the second terminal successfully receives the final response caused by the INVITE message, i.e., receiving the 200OK signaling transmitted in step 721-step 724.

In step 726, the AS-A transmits the ACK signaling to the AS-B.

In some embodiments, the AS-A transmits the ACK signaling to the AS-B to indicate that the second terminal successfully receives the 200OK signaling.

In step 727, the AS-B transmits the ACK signaling to the AS-C.

In some embodiments, the AS-B transmits the ACK signaling to the AS-C to indicate that the second terminal successfully receives the 200OK signaling.

In step 728, the AS-C transmits the ACK signaling to the third terminal.

In some embodiments, the AS-C transmits the ACK signaling to the third terminal to indicate that the second terminal successfully receives the 200OK signaling.

In step 729, the second terminal transmits the NOTIFY message to the AS-A.

In some embodiments, the second terminal transmits the NOTIFY message to the AS-A to indicate that the second terminal successfully establishes the dialogue with the third terminal.

In some embodiments, the NOTIFY includes the 200OK signaling.

In step 730, the AS-A transmits the NOTIFY message to the AS-B.

In some embodiments, the AS-A transmits the NOTIFY message to the AS-B to indicate that the second terminal successfully establishes the dialogue with the third terminal.

In some embodiments, the NOTIFY message includes the 200OK signaling.

In step 731, the AS-B transmits the NOTIFY message to the first terminal.

In some embodiments, the AS-B transmits the NOTIFY message to the first terminal to indicate that the second terminal successfully establishes the dialogue with the third terminal.

In some embodiments, the NOTIFY message includes the 200OK signaling.

In step 732, the first terminal transmits the 200OK signaling to the AS-B.

In some embodiments, the first terminal transmits the 200OK signaling to the AS-B to indicate that the first terminal successfully receives the NOTIFY message transmitted by the second terminal.

In step 733, the AS-B transmits the 200OK signaling to the AS-A.

In some embodiments, the AS-B transmits the 200OK signaling to the AS-A to indicate that the first terminal successfully receives the NOTIFY message transmitted by the second terminal.

In step 734, the AS-A transmits the 200OK signaling to the second terminal.

In some embodiments, the AS-A transmits the 200OK signaling to the second terminal to indicate that the first terminal successfully receives the NOTIFY message transmitted by the second terminal.

In step 735, the first terminal transmits a BYE signaling to the AS-B.

In some embodiments, the first terminal transmits the BYE signaling to the AS-B to request for releasing the dialogue resources between the first terminal and the second terminal.

In step 736, the AS-B transmits the BYE signaling to the AS-A.

In some embodiments, the AS-B transmits the BYE signaling to the AS-A to request for releasing the dialogue resources between the first terminal and the second terminal.

In step 737, the AS-A transmits the BYE signaling to the second terminal.

In some embodiments, the AS-A transmits the BYE signaling to the second terminal to request for releasing the dialogue resources between the first terminal and the second terminal.

In step 738, the second terminal transmits the 200OK signaling to the AS-A.

In some embodiments, the second terminal transmits the 200OK signaling to the AS-A to indicate that the second terminal successfully receives the BYE signaling and agrees to release the dialogue resources between the first terminal and the second terminal.

In step 739, the AS-A transmits the 200OK signaling to the AS-B.

In some embodiments, the AS-A transmits the 200OK signaling to the AS-B to indicate that the second terminal successfully receives the BYE signaling and agrees to release the dialogue resources between the first terminal and the second terminal.

In step 740, the AS-B transmits the 200OK signaling to the first terminal.

In some embodiments, the AS-B transmits the 200OK signaling to the first terminal to indicate that the second terminal successfully receives the BYE signaling and agrees to release the dialogue resources between the first terminal and the second terminal.

In some embodiments, the first terminal receives the 200OK signaling and releases the dialogue resources between the first terminal and the second terminal.

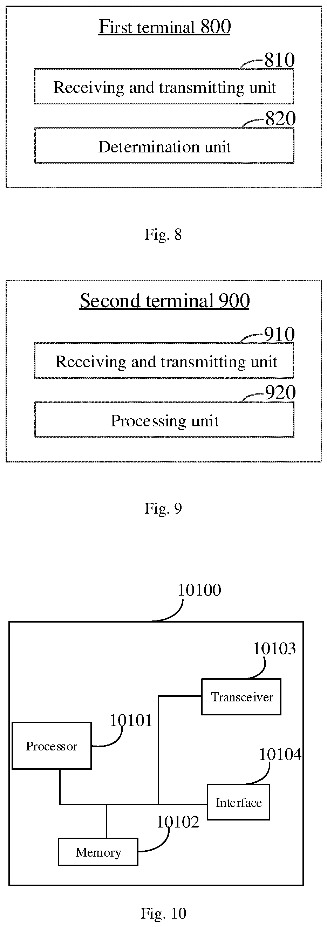

Fig. 8 is a schematic diagram of a first terminal 800 according to embodiments of the present invention, and the first terminal includes a receiving and transmitting unit 810 configured to transmit a first request message to a second terminal under a first condition. The first request message is configured to request for releasing dialogue resources between the first terminal and the second terminal, and the first condition is that a dialogue between the second terminal and the third terminal is successful.

The receiving and transmitting unit 810 is further configured to receive a first response message transmitted by the second terminal, and the first response message is configured to indicate that the second terminal successfully receives the first request message.

In the first terminal according to the present invention, the problem that the dialogue resources between the first terminal and the second terminal are not released when the blind transfer ends is solved through transmitting the first request message to the second terminal under the first condition, thus reducing the waste of communication resources, and avoiding the problem that the dialogue resources between the first terminal and the second terminal are still needed to be used in the blind transfer but have already been released, so as to improve the stability of the blind transfer.

In some embodiments, the receiving and transmitting unit 810 is further configured to: transmit a second request message to the second terminal before transmitting the first request to the second terminal under the first condition, the second request message being configured to request the second terminal to establish the dialogue with the third terminal; and receive a second response message transmitted by the second terminal, the second response message being configured to indicate that the second terminal successfully receives the second request message.

In some embodiments, the receiving and transmitting unit 810 is further configured to: receive a first notification message transmitted by the second terminal, the first notification message being configured to notify the first terminal that the second terminal tries to establish the dialogue with the third terminal; and transmit a third response message to the second terminal, the third response message being configured to indicate that the first terminal successfully receives the first notification message.

In some embodiments, the receiving and transmitting unit 810 is further configured to receive a second notification message transmitted by the second terminal, and the second notification message is configured to indicate whether the dialogue between the second terminal and the third terminal is successful.

In some embodiments, the first terminal further includes a determination unit 820, which is configured to determine that the first condition is satisfied based on the second notification message.

In some embodiments, the receiving and transmitting unit 810 is further configured to transmit a fourth response message to the second terminal, and the fourth response message is configured to indicate that the first terminal successfully receives the second notification message.

Fig. 9 is a schematic diagram of a second terminal 900 according to embodiments of the present invention, and the second terminal includes a receiving and transmitting unit 910 configured to: receive a first request message transmitted by a first terminal under a first condition, the first request message being configured to request for releasing dialogue resources between the first terminal and the second terminal, wherein the first condition is that a dialogue between the second terminal and a third terminal is successful; and transmit a first response message to the first terminal, the first response message being configured to indicate that the second terminal successfully receives the first request message.

In the second terminal according to the present invention, the first request message transmitted by the first terminal is received, the first request message is configured to request for releasing the dialogue resources between the first terminal and the second terminal, the first response message is transmitted to the first terminal, and the first response message is configured to indicate that the second terminal successfully receives the first request. Thus, the problem that the dialogue resources between the first terminal and the second terminal are not released when the blind transfer ends is solved, which reduces the waste of communication resources, and avoids the problem that the dialogue resources between the first terminal and the second terminal are still needed to be used in the blind transfer but have already been released, improving the stability of the blind transfer.

In some embodiments, the receiving and transmitting unit 910 is further configured to: receive a second request message transmitted by the first terminal before receiving the first request message transmitted by the first terminal, the second request message being configured to request the second terminal to establish the dialogue with the third terminal; and transmit a second response message to the first terminal, the second response message being configured to indicate that the second terminal successfully receives the second request message.

In some embodiments, the receiving and transmitting unit 910 is further configured to: transmit a first notification message to the first terminal, the first notification message being configured to notify the first terminal that the second terminal tries to establish the dialogue with the third terminal; and receive a third response message transmitted by the first terminal, the third response message being configured to indicate that the first terminal successfully receives the first notification message.

In some embodiments, the receiving and transmitting unit 910 is further configured to: transmit a third request message to the third terminal, the third request message being configured for the second terminal to request for establishing the dialogue with the third terminal; and receive a fourth response message transmitted by the third terminal, the fourth response message being configured to indicate that the third terminal successfully receives the third request message.

In some embodiments, the receiving and transmitting unit 910 is further configured to receive a fifth response message transmitted by the third terminal, and the fifth response message is configured to indicate that the third terminal tries to establish the dialogue with the second terminal.

In some embodiments, the second terminal 900 also includes a processing unit 920, which is configured to establish the dialogue with the third terminal based on the fifth response message.

In some embodiments, the receiving and transmitting unit 910 is further configured to transmit a fourth request message to the third terminal, and the fourth request message is configured to indicate that the second terminal successfully receives the fourth response message.

In some embodiments, the receiving and transmitting unit 910 is also configured to: transmit a second notification message to the first terminal, the second notification message being configured to indicate whether the dialogue between the second terminal and the third terminal is successful; and receive a fourth response message transmitted by the first terminal, the fourth response message being configured to indicate that the first terminal successfully receives the second notification message.

As the device provided in the embodiments of the present invention corresponds to the methods provided by the above embodiments, the implementation of the method is also applicable to the device provided by the embodiments of the present invention and will not be described in detail in the embodiments.

In the above embodiments provided by the present invention, the method and the device provided by the embodiments of the present application have been introduced. In order to achieve the various functions of the methods provided by the embodiments of the present invention, the communication apparatus can include a hardware structure and a software module, and the various functions are implemented in the form of the hardware structure, the software module, or a combination thereof. One of the above functions can be executed in the form of the hardware structure, the software module, or the combination thereof.

Fig. 10 is a schematic diagram of a communication apparatus 10100 proposed by embodiments of the present invention. The communication apparatus 10100 can be a terminal, or can be a chip, a system on chip, or a processor and so on that supports the communication apparatus to achieve any of the above methods, or can be a chip, a system on chip, or a processor and so on that supports the terminal to achieve any of the above methods. The communication apparatus 10100 can be configured to achieve the methods described in the above method embodiments, which specifically can refer to the explanation in the above method embodiments.

As shown in Fig. 10, the communication apparatus 10100 includes one or more processors 10101. The processor 10101 can be a general-purpose processor or a dedicated processor, for example, can be a baseband processor or a central processor. The baseband processor can be configured to process communication protocols and communication data, while the central processor can be configured to control the communication apparatus (such as a base station, a baseband chip, a terminal, a terminal chip, a DU or a CU, etc.), execute programs, and process data of programs. The processor 10101 is configured to call instructions to enable the communication apparatus 10100 to execute any of the above methods.

In some embodiments, the communication apparatus 10100 also includes one or more memories 10102 for storing instructions. Optionally, all or part of the memories 10102 can also be located outside the communication apparatus 10100.

In some embodiments, the communication apparatus 10100 also includes one or more transceivers 10103. When the communication apparatus 10100 includes one or more transceivers 10103, communication steps such as transmitting and receiving in the above method are executed by the transceiver 10103, and the other steps are executed by the processor 10101.

In some embodiments, the transceiver can include a receiver and a transmitter, which may be separate or integrated together. Optionally, terms such as transceiver, receiving and transmitting unit, receiving and transmitting machine, and receiving and transmitting circuit can be replaced with each other, terms such as transmitter, transmitting unit, transmitting machine, and transmitting circuit can be replaced with each other, and terms such as receiver, receiving unit, receiving machine, and receiving circuit can be replaced with each other.

Optionally, the communication apparatus 10100 also includes one or more interface circuits 10104, which are connected to the memory 10102. The interface circuit 10104 can be configured to receive signals from the memory 10102 or other devices, and can be configured to transmit signals to the memory 10102 or other devices. For example, the interface circuit 10104 can read instructions stored in the memory 10102 and transmit the instructions to the processor 10101.

The communication apparatus 10100 described in the above embodiments can be a network device or a terminal, but the scope of the communication apparatus 10100 described in the present invention is not limited to this. The structure of the communication apparatus 10100 may be not limited by Fig. 10. The communication apparatus can be an independent device or can be part of a large device. For example, the communication apparatus can be: 1) an independent integrated circuit IC, or a chip, or a system on chip or a subsystem; (2) a set of one or more ICs, optionally, the set of ICs can also include a storage component for storing data and programs; (3) ASIC, such as a modem; (4) a module that can be embedded in other devices; (5) a receiving machine, a terminal, an intelligent terminal, a cellular phone, a wireless apparatus, a handheld machine, a mobile unit, a vehicle mounted apparatus, a network apparatus, a cloud apparatus, an artificial intelligence apparatus, etc.; (6) others and so on.

The embodiments of the present invention also propose a non-transitory computer-readable storage medium storing computer instructions, and the computer instructions are configured to enable the computer to execute the method described in the above embodiments of the present invention.

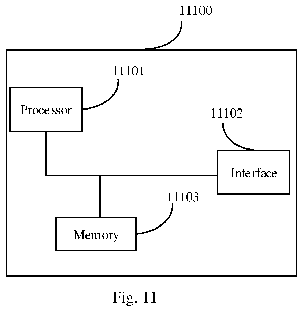

Fig. 11 is a schematic diagram of a chip 11100 proposed by the embodiments of the present invention. For the case that the communication apparatus 8100 can be a chip or a system on chip, the schematic diagram of the chip 11100 shown in Fig. 11 can be referred to, but not limited to this.

The chip 11100 includes one or more processors 11101, which are configured to call instructions to enable the chip 11100 to execute any of the above methods. The chip 11100 also includes one or more interface circuits 11102, which are connected to a memory 11103. The interface circuit 11102 can be configured to receive signals from the memory 11103 or other devices, and can be configured to transmit signals to the memory 11103 or other devices. For example, the interface circuit 11102 can read an instruction stored in the memory 11103 and transmit the instruction to the processor 11101. Optionally, terms such as interface circuit, interface, transceiver pin, and transceivers can be replaced with each other.

In some embodiments, the chip 11100 also includes one or more memories 11103 for storing instructions. Optionally, all or part of the memories 11103 can be located outside the chip 11100.

In the description of the specification, the reference terms "one embodiment," "some embodiments," "illustrative embodiment," "examples," "specific examples," or "some examples," etc. refer to specific features, structures, materials, or characteristics described in conjunction with implementations or examples included in at least one implementation or example of the present invention. In the specification, the illustrative expressions of the above terms may not necessarily refer to the same implementation or example. Moreover, the specific features, structures, materials, or characteristics described can be appropriately combined in any one or more implementations or examples.

Any process or method description in a flow chart or otherwise described herein can be understood as representing a module, a fragment, or a portion of codes including one or more executable instructions for implementing specific logical functions or steps, and the scope of preferred embodiments of the present invention includes other implementations, in which functions can be executed regardless of the order shown or discussed, including in a substantially simultaneous manner or in an opposite order according to the functions involved, which should be understood by those skilled in the art to which the embodiments of the present invention belong.

The logic and/or steps represented in a flow chart or otherwise described herein, for example, a ordered list of executable instructions that can be considered to implement logical functions, can be specifically implemented in any computer-readable medium for use by an instruction execution systems, a device, or an apparatus (such as a computer-based system, a system including processing modules, or other systems that can retrieve and execute instructions from the instruction execution system, the device, or the apparatus), or use in combination with the instruction execution systems, the devices, or the apparatuses. For the specification, the "computer-readable medium" can refer to any device that can contain, store, communicate, propagate, or transmit programs for use by or in conjunction with the instruction execution systems, the devices, or the apparatuses. More specific examples of the computer-readable media (non-exhaustive list) include the following: an electrical connection unit (control method) with one or more wirings, a portable computer cartridge (magnetic device), a random access memory (RAM), a read-only memory (ROM), an erasable editable read-only memory (EPROM or flash memory), a fiber optic device, and a portable optical disc read-only memory (CDROM). In addition, the computer-readable medium can even be paper or other suitable media on which programs can be printed, as programs can be obtained electronically by, for example, optical scanning of paper or other media, followed by editing, interpretation, or other appropriate processing as necessary, and then stored in a computer memory.

It should be understood that various parts of the embodiments of the present invention can be implemented using hardware, software, firmware, or a combination thereof. In the above implementations, multiple steps or methods can be implemented using the software or the firmware stored in the memory and executed by an appropriate instruction execution system. For example, if implemented by hardware, as in another implementation, any one or a combination of the following techniques commonly known in the art can be used: a discrete logic circuit with a logic gate circuit for implementing logical functions on data signals, a specialized integrated circuit with an appropriate combination logic gate circuit, a programmable gate array (PGA), a field programmable gate array (FPGA), etc.

Those ordinary skilled in the art can understand that all or part of the steps carried by the methods according to the above embodiments can be completed by instructing the relevant hardware through programs. The programs can be stored in a computer-readable storage medium, and when executed, implement one or a combination of the steps of the method embodiments.

In addition, various functional units in various embodiments of the present invention can be integrated into a processing module, or can also physically exist separately, or two or more units can be integrated into one module. The integrated module mentioned above can be implemented in the form of hardware, and can also be implemented in the form of the software functional module. If the integrated module is implemented in the form of the software functional module and sold or used as an independent product, it can also be stored in a computer-readable storage medium. The storage media mentioned above can be a read-only memory, a disk, or an optical disc, etc.

Although the embodiments of the present invention have been shown and described above, it can be understood that the above embodiments are illustratively and cannot be understood as limitations to the present invention. Those ordinary skilled in the art can make changes, modifications, substitutions, and variations to the above embodiments within the scope of the present invention as defined by the appended claims.

## Claims

1. A blind transfer method, executed by a first terminal and comprising:
under a first condition, transmitting (201, 308) a first request message to a second terminal, the first request message being configured to request for releasing dialogue resources between the first terminal and the second terminal, wherein the first condition is that a dialogue between the second terminal and a third terminal is successful; and
receiving (202, 309) a first response message transmitted by the second terminal, the first response message being configured to indicate that the second terminal successfully received the first request message.

2. The method according to claim 1, wherein before transmitting (201, 308) the first request message to the second terminal under the first condition, the method further comprises:
transmitting (301) a second request message to the second terminal, the second request message being configured to request the second terminal to establish the dialogue between the second terminal and the third terminal; and
receiving (302) a second response message transmitted by the second terminal, the second response message being configured to indicate that the second terminal successfully received the second request message.

3. The method according to claim 2, further comprising:
receiving (303) a first notification message transmitted by the second terminal, the first notification message being configured to notify the first terminal that the second terminal attempted to establish the dialogue between the second terminal and the third terminal; and
transmitting (304) a third response message to the second terminal, the third response message being configured to indicate that the first terminal successfully received the first notification message.

4. The method according to any one of claims 1-3, further comprising:
receiving (305) a second notification message transmitted by the second terminal, the second notification message being configured to indicate whether the dialogue between the second terminal and the third terminal is successful; and
determining (306) that the first condition is satisfied based on the second notification message.

5. The method according to claim 4, further comprising:
transmitting (307) a fourth response message to the second terminal, the fourth response message being configured to indicate that the first terminal successfully received the second notification message.

6. A blind transfer method, executed by a second terminal and comprising:
under a first condition, receiving (401, 512) a first request message transmitted by a first terminal, the first request message being configured to request for releasing dialogue resources between the first terminal and the second terminal, wherein the first condition is that a dialogue between the second terminal and a third terminal is successful; and
transmitting (402, 513) a first response message to the first terminal, the first response message being configured to indicate that the second terminal successfully received the first request message.

7. The method according to claim 6, wherein before receiving (401, 512) the first request message transmitted by the first terminal, the method further comprises:
receiving (501) a second request message transmitted by the first terminal, the second request message being configured to request the second terminal to establish the dialogue between the second terminal and the third terminal; and
transmitting (502) a second response message to the first terminal, the second response message being configured to indicate that the second terminal successfully received the second request message.

8. The method according to claim 7, further comprising:
transmitting (503) a first notification message to the first terminal, the first notification message being configured to notify the first terminal that the second terminal attempted to establish the dialogue between the second terminal and the third terminal; and
receiving (504) a third response message transmitted by the first terminal, the third response message being configured to indicate that the first terminal successfully received the first notification message.

9. The method according to claim 8, further comprising:
transmitting (505) a third request message to the third terminal, the third request message being configured for the second terminal to request for establishing the dialogue between the second terminal and the third terminal; and
receiving (506) a fourth response message transmitted by the third terminal, the fourth response message being configured to indicate that the third terminal successfully received the third request message.

10. The method according to claim 9, further comprising:
receiving (507) a fifth response message transmitted by the third terminal, the fifth response message being configured to indicate that the third terminal attempted to establish the dialogue with the second terminal; and
establishing (508) the dialogue between the second terminal and the third terminal based on the fifth response message.

11. The method according to claim 9 or 10, further comprising:
transmitting (509) a fourth request message to the third terminal, the fourth request message being configured to indicate that the second terminal successfully received the fourth response message.

12. The method according to any one of claims 6-11, further comprising:
transmitting (510) a second notification message to the first terminal, the second notification message being configured to indicate whether the dialogue between the second terminal and the third terminal is successful; and
receiving (511) a fourth response message transmitted by the first terminal, the fourth response message being configured to indicate that the first terminal successfully received the second notification message.

13. A communication apparatus (10100), comprising:
a memory (10102) storing computer programs therein; and
a processor (10101) configured to execute the computer programs stored in the memory (10102) to enable the communication apparatus to execute:
the method according to any one of claims 1-5; or
the method according to any one of claims 6-12.

14. A non-transitory computer-readable storage medium storing computer instructions, wherein when the computer instructions are executed, the following method is allowed to be implemented:
the method according to any one of claims 1-5; or
the method according to any one of claims 6-12.

15. A chip (11100), comprising one or more interfaces (11102) and one or more processors (11101), wherein the interface (11102) is configured to receive a signal from a memory of an electronic apparatus and transmit the signal to the processor (11101), and the signal comprises computer instructions stored in the memory, which, when executed by the processor, allow the electronic apparatus to execute:
the method according to any one of claims 1-5; or
the method according to any one of claims 6-12.
